(19) **Europäisches Patentamt / European Patent Office / Office européen des brevets**

(11) **EP 4 202 483 A1**

(12) **EUROPEAN PATENT APPLICATION**
published in accordance with Art. 153(4) EPC

(43) Date of publication:
**28.06.2023 Bulletin 2023/26**

(21) Application number: **21857207.1**

(22) Date of filing: **25.04.2021**

(51) International Patent Classification (IPC):
**G01S 7/497** (2006.01)

(52) Cooperative Patent Classification (CPC):
**G01S 7/4816; G01S 7/4863; G01S 7/487;**
**G01S 7/497; G01S 17/10**

(86) International application number:
**PCT/CN2021/089478**

(87) International publication number:
**WO 2022/037106 (24.02.2022 Gazette 2022/08)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **21.08.2020 CN 202010852353**

(71) Applicant: **Hesai Technology Co., Ltd.**
**Shanghai 201821 (CN)**

(72) Inventors:
• **SUN, Kai**
**Shanghai 201821 (CN)**
• **XIANG, Shaoqing**
**Shanghai 201821 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **DETECTION METHOD USING LIDAR AND LIDAR**

(57) The present disclosure provides a detection method (100) of a lidar (300). The lidar (300) includes a detection part, and the detection part includes a plurality of detection units (320), where the plurality of detection units (320) may form one or more output regions. The method (100) includes the following steps: selecting an output region from the detection part according to current ambient light information (S101); the output region including one or more detection units (320); obtaining echo information of the selected output region (S102); and performing detection according to the echo information of the selected output region (S103). The signal-to-noise ratio at a receiving end of the lidar (300) is increased, and performance of the lidar (300) is improved.

**S101**
A detection part selects an output region according to ambient light information

**S102**
Obtain echo information corresponding to the selected output region

**S103**
Perform detection according to the echo information output by the selected output region

**FIG. 1**

EP 4 202 483 A1

Description

TECHNICAL FIELD

The present disclosure generally relates to the field of photoelectric technologies, and in particular, to a detection method of a lidar and a lidar using the method.

BACKGROUND

Lidar is an apparatus that uses optical means for precise ranging, and during the past recent years, it has been widely applied in various fields such as industry, agriculture, precision measurement and sensing, communication and information processing, medical treatment, military, obstacle monitoring, geological modeling, location acquisition, robotics, and unmanned vehicles.

Lidar calculates a distance of an obstacle by measuring a time of flight (TOF) of an emitted light that will be reflected back to a lidar by an obstacle, and it can cover different directions by scanning means to obtain a series of distance points and perceive the surrounding environment. The main structure of lidar generally includes a laser emitting end and a laser receiving end, and optical system, signal processing module, control module, scanning structure, and other mechanical structures. The receiving end is a very important part, which, together with the signal processing module, determines important indicators such as the ranging performance and ranging accuracy of the lidar. In practical applications, the main problem faced by the receiving end is ambient light noise, which requires the capability to discriminate signals in the noise and improvement of a signal-to-noise ratio. The signal-to-noise ratio directly determines the quality of the signal, which directly affects point cloud quality indicators of a lidar, such as the amount of pixels and noises of a point cloud.

The lidar may use a single photon avalanche diode (SPAD) array as the receiving end. In this case where a SPAD array is used as a receiving device, background light (where the background light mainly refers to random noise generated by the ambient light entering a detector after illuminating an obstacle and being reflected) will increase output background noise, causing a large quantity of noise pulses to enter a device (for example, a time-to-digital converter (TDC)) that is subsequently used to analyze signals for generating echo information. At the meantime, the processing capacity of the device is limited. To prevent the signal pulse from being overwhelmed by a large amount of noise, it is necessary to control the signal-to-noise ratio at the receiving end, so as to maximize the detection distance. Different weather conditions or different reflectivity of targets may cause the levels of background noise to vary. Therefore, different signal-to-noise ratios greatly affect the ranging performance of a lidar. Improving the signal-to-noise ratio has also become an important factor for improving the ranging performance of a lidar.

The traditional way to improve the signal-to-noise ratio is to optimize the subsequent signal processing through an algorithm to improve the signal-to-noise ratio. For example, a filter is used to reduce noise, and a special code (for example, Barker Code) of the filter is used to reduce the noise generated through filtering, to realize signal discrimination. However, this method has a poor effect in improving the signal-to-noise ratio in practice.

The content of "BACKGROUND" part is merely technologies known to the inventor, and does not represent the prior art in the field.

SUMMARY

The present disclosure provides a detection method of a lidar, which solves the problem of an excessively low signal-to-noise ratio in the prior art through a solution that allows the selection of the quantities and regions of driving units for a SPAD array.

In view of at least one defect in the prior art, the present disclosure provides a detection method of a lidar. The lidar according to the present disclosure includes a detection part, and the detection part includes a plurality of detection units, where the plurality of detection units may form one or more output regions; and the method includes the following steps:

a: selecting an output region from the detection part according to current ambient light information; the output region including one or more detection units;
b: obtaining echo information of the selected output region; and
c: performing detection according to the echo information of the selected output region.

According to an aspect of the present disclosure, the method further includes:
determining at least one comparison threshold according to ambient light information; and step a further includes:
a': selecting an output region from the detection part according to the current ambient light information and the at least one comparison threshold.

According to an aspect of the present disclosure, the at least one comparison threshold includes a first comparison threshold and a second comparison threshold, where the first comparison threshold is greater than or equal to the second comparison threshold; the one or more output regions include at least a first output region and a second output region, where the first output region is less than the second output region; and step a' further includes:

selecting the second output region having the relatively smaller area when a light intensity of current ambient light is greater than the first comparison threshold; and
selecting the first output region having the relatively larger area when the light intensity of the current ambient light is less than the second comparison threshold.

According to an aspect of the present disclosure, the first comparison threshold is equal to the second comparison threshold.

According to an aspect of the present disclosure, the method further includes the following step: determining the one or more output regions according to one or more historical light spot regions.

According to an aspect of the present disclosure, the method further includes:

obtaining a light spot region; and
based on the light spot region, determining at least one output region corresponding to the light spot region; and
step a further includes:
a": selecting an output region from the at least one output region according to the current ambient light information, the selected output region being covered by the light spot region.

According to an aspect of the present disclosure, the method further includes:
updating the one or more output regions according to a new light spot region.

According to an aspect of the present disclosure, the detection unit may include a plurality of detectors.

According to an aspect of the present disclosure, the detector represents a single photon avalanche diode (SPAD).

According to an aspect of the present disclosure, the detection unit represents a SPAD array or a silicon photomultiplier (SiPM).

According to an aspect of the present disclosure, the method further includes the following step: obtaining a distance between the lidar and a target object according to an output of detection units corresponding to the output region.

According to another aspect of the present disclosure, a lidar is further provided, including:

an emission unit, configured to emit a detection laser beam to detect a target object;
a detection part, configured to receive echoes reflected on the target object by the detection laser beam and output an echo signal; and
a processing unit, coupled to the detection part, and configured to use the detection method to control the detection part and obtain the echo signal output by the detection part.

According to another aspect of the present disclosure, the processing unit is further configured to: calculate a distance between the lidar and the target object according to the output echo signal.

The embodiments of the present disclosure improve the signal-to-noise ratio of lidar ranging and the performance of lidar, by selecting and determining the detection units and regions thereof in a lidar for detection, and calculating a distance between a target object and the lidar according to an echo received by the detection units.

**BRIEF DESCRIPTION OF THE DRAWINGS**

The accompanying drawings are used to provide a further understanding of the present disclosure, and constitute a part of the specification, are used to explain the present disclosure in combination with the embodiments of the present disclosure, and do not constitute a limitation to the present disclosure. In the accompanying drawings:

FIG. 1 is a flowchart of a lidar detection method according to an embodiment of the present disclosure;
FIG. 2 is a schematic diagram of a SPAD planar array according to an embodiment of the present disclosure;
FIG. 3 is a block diagram of a lidar according to an embodiment of the present disclosure;
FIG. 4 is a flowchart of lidar ranging according to an embodiment of the present disclosure;
FIG. 5a is a schematic diagram of spatial intensity distribution of an echo signal and an ambient light signal in a detection part according to an embodiment of the present disclosure; and
FIG. 5b is a schematic diagram of spatial intensity distribution of an echo signal and an ambient light signal in a detection part according to an embodiment of the present disclosure.

**DETAILED DESCRIPTION**

Only certain exemplary embodiments are briefly described below. As a person skilled in the art can realize, the described embodiments may be modified in various different ways without departing from the spirit or the scope of the present disclosure. Therefore, the accompanying drawings and the description are to be considered illustrative in nature but not restrictive.

In the description of the present disclosure, it should be understood that directions or location relationships indicated by terms "center", "longitudinal", "landscape", "length", "width", "thickness", "upper", "lower", "front", "rear", "left", "right", "vertical", "horizontal", "top", "bottom", "inner", "outer", "clockwise", and "counterclockwise" are directions or location relationships shown based on the accompanying drawings, are merely used for the convenience of describing the present disclosure and simplifying the description, but are not used to indicate or imply that a device or an element needs to have a particular direction or needs to be constructed and operated in a particular direction, and therefore, cannot be understood as a limitation to the present disclosure. In addition, the terms "first" and "second" are used for descriptive purposes only and are not to be construed as indicating or implying relative importance or implicitly indicating the quantity of technical features indicated. Therefore, features defined by "first" and "second" may explicitly or implicitly include one or more of the features. In the description of the present disclosure, unless otherwise explicitly specified, "a plurality of" means two or more than two.

In the description of the present disclosure, it should be noted that unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection, an electrical connection, mutual communication; or the connection may be a direct connection, an indirect connection through an intermediate medium, internal communication between two components, or an interaction relationship between two components. The specific meanings of the above terms in the present disclosure may be understood according to specific circumstances for a person of ordinary skill in the art.

In the present disclosure, unless otherwise explicitly stipulated and restricted, that a first feature is "on" or "under" a second feature may include that the first and second features are in direct contact, or may include that the first and second features are not in direct contact but in contact by using other features therebetween. Moreover, the first feature being "over", "above", and "on" the second feature includes that the first feature is directly above or obliquely above the second feature, or merely means that the first feature has a larger horizontal height than the second feature. That the first feature is "below", "under", or "beneath" the second feature includes that the first feature is right below and obliquely below the second feature, or merely indicates that a horizontal height of the first feature is lower than that of the second feature.

Many different implementations or examples are provided in the following disclosure to implement different structures of the present disclosure. To simplify the disclosure of the present disclosure, components and settings in specific examples are described below. Certainly, the components and settings are merely examples and are not intended to limit the present disclosure. In addition, in the present disclosure, reference numerals and/or reference letters may be repeated in different examples. The repetition is for the purposes of simplification and clearness, and does not indicate a relationship between various implementations and/or settings discussed. Moreover, the present disclosure provides examples of various specific processes and materials, but a person of ordinary skill in the art may be aware of application of another process and/or use of another material.

Exemplary embodiments of the present disclosure are described below in detail with reference to the accompanying drawings. It should be understood that the exemplary embodiments described herein are merely used to explain the present disclosure but are not intended to limit the present disclosure.

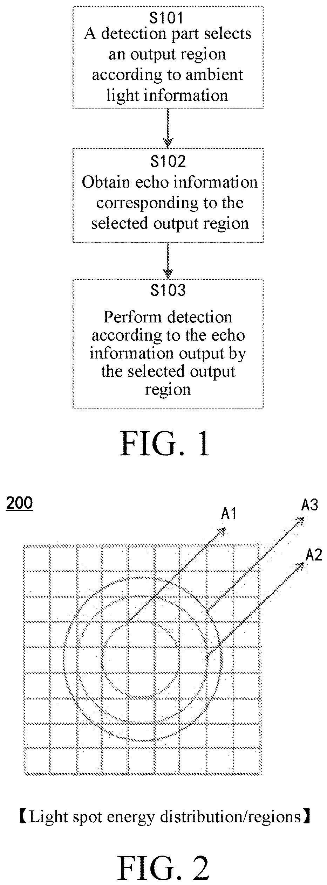

FIG. 1 is a flowchart of a lidar detection method 100 according to an embodiment of the present disclosure. The lidar detection method 100 is used for detecting a target object within a certain distance to the lidar. The lidar detection method 100 will be described below in detail with reference to FIG. 1. As shown in the figure, the detection method 100 includes the following steps: In step S101, a detection part selects an output region according to ambient light information.

The detection part of the lidar includes one or more detection units (or may be referred to as pixels), and each detection unit may include a plurality of detectors. The detection part receives an echo and/or ambient light of the lidar, and converts the echo and/or ambient light to an electrical signal.

Referring to FIG. 2, the grid array shown in FIG. 2 represents a part or the whole of the detection part, where each grid represents one detection unit; and each grid may further include a plurality of detectors.

Preferably, the detector is a device with a single-photon detection capability; and the detection unit is implemented by a linear array or a planar array of the detector.

More preferably, the device with a single-photon detection capability is a single photon avalanche diode (SPAD). The detection unit may be a SPAD array, where each SPAD array is formed by independently addressable SPAD devices, and outputs a digital signal after the quantity of received photons is counted; or the detection unit may be a silicon photomultiplier (SiPM) unit, where each SiPM unit is formed by a plurality of SPAD devices connected in parallel, and outputs an analog signal with a pulse peak value corresponding to the quantity of photons received by the plurality of SPAD devices.

The detection part according to this solution may include a plurality of output regions, and each output region may correspond to one or more detection units.

Moreover, a person skilled in the art may understand that the device with a single-photon detection capability can respond to signal light and/or ambient light.

The detector can directly obtain light intensity information of the ambient light, for example, obtain an output of the SPAD array or SiPM unit when a laser of the lidar does not emit signal light, to determine the light intensity information of the ambient light. Alternatively, a separate ambient light measurement unit may be arranged on the lidar to sense an ambient light intensity. In this case, the ambient light intensity can be measured and obtained at any time without waiting for a period during which the laser of the lidar does not emit light. A person skilled in the art may understand that there may be various manners of obtaining the light intensity information of the ambient light, and details are not described herein again.

Specifically, for step S101, the detector selects an output region from the detection part according to current ambient light information; the output region including one or more detection units.

More specifically, when the light intensity information of the ambient light is less than a predetermined comparison threshold, an output region having the relatively larger area is selected from the plurality of output regions; and when light intensity information of the ambient light is greater than the predetermined comparison threshold, an output region having the relatively smaller area is selected from the plurality of output regions.

Preferably, the lidar determines at least one comparison threshold according to ambient light information; and selects an output region from the detection part according to the current ambient light information and the at least one comparison threshold in step S101.

The at least one comparison threshold includes a first comparison threshold and a second comparison threshold.

In some embodiments, the first comparison threshold is greater than or equal to the second comparison threshold; and in some other embodiments, the first comparison threshold is equal to the second comparison threshold. That is, only one comparison threshold is used for determining.

According to an exemplary embodiment of this solution, the detection part includes a first output region and a second output region, and the first output region < second output region; and step S101 further includes step S1011 (not shown in the figure) and step S1012 (not shown in the figure). In step S1011, when the ambient light intensity is greater than or equal to the comparison threshold, the first output region is selected; and in step S1012, when the ambient light intensity is less than the comparison threshold, the second output region is selected.

A signal-to-noise ratio of the output region related to the ambient light may be determined in the following manner.

When the ambient light intensity is greater than or equal to the comparison threshold, the signal-to-noise ratio of the output region is represented by the following formula (1):

$$SNR = S/\sqrt{N} \quad (1);$$

and when the ambient light intensity is less than the comparison threshold, the signal-to-noise ratio of the output region is represented by the following formula (2):

$$SNR = S/C \quad (2);$$

where S is used for indicating a receiving ratio of signal light energy of the output region, N is the quantity of detectors in the output region, and C is a constant.

The receiving ratio S of the signal light energy may be positively correlated with an area ratio of the entire light spot occupied by the output region.

In general, shot noise based on the Poisson distribution may be represented as $SNR = \frac{N}{\sqrt{N}}$, where N is used for indicating all particles obtained from the shot noise. In the process of performing signal light detection by using single-photon detectors, the obtained signal light part is indicated by a receiving ratio of energy (for example, according to a percentage of a reading region relative to the size of the entire light spot, and it is assumed as S), and due to the easy-to-saturate device characteristics of the single-photon detectors (such as SPADs or SiPM), photons of ambient light will affect most of the detectors under strong ambient light, it can be considered that ambient noise particles obtained by the single-photon detectors are corresponding to the quantity thereof. That is, N may be used to indicate the quantity of detectors included in the one or more detection units, to obtain the signal-to-noise ratio formula shown in (1) above. Under weak ambient light conditions, photons of the ambient light have little influence on the detectors during the detection, and the dark count can be ignored. In this case, the foregoing formula (2) may be used to calculate the signal-to-noise ratio.

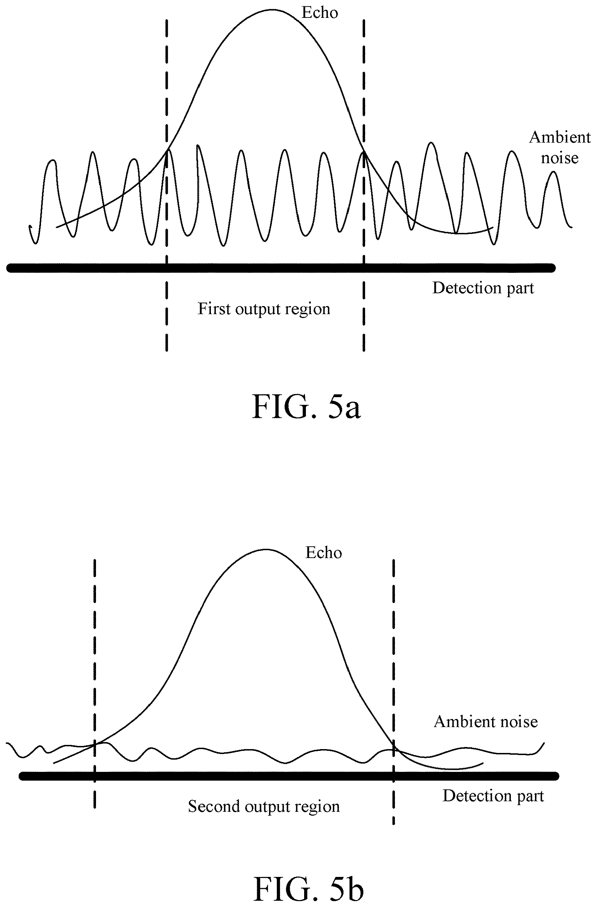

With reference to FIG. 5a and FIG. 5b, FIG. 5a is a schematic diagram of intensity distribution in a spatial dimension of signals received by a detection part in a case of an echo signal and a relatively strong ambient light signal according to an embodiment of the present disclosure. FIG. 5b is a schematic diagram of intensity distribution in a spatial dimension of signals received by a detection part in a case that the ambient light signal is relatively weak.

In a case of relatively strong ambient light, the first output region having the relatively smaller area is selected, which can reduce the influence of ambient light in surrounding regions with relatively weak signal light while covering with relatively good signal light. In a case of relatively weak ambient light, the second output region having the relatively larger area is selected, which can obtain as much signal light as possible and improve the signal-to-noise ratio.

FIG. 2 is a schematic diagram of a SPAD planar array according to an embodiment of the present disclosure, which is used for describing a specific manner of selecting an output region in step S101 according to an exemplary embodiment of the present disclosure. As shown in the figure, the detection part is implemented by a SPAD planar array 200, and the detection part includes a first output region A1, a second output region A2, and a light spot region A3. The area of the first output region A1 is relatively smaller, for example, including 70% of the receiving laser energy, and occupying 9 SPAD detectors; and the area of the second output region A2 is relatively larger, including 90% of the receiving laser energy, and occupying 25 SPAD detectors. In addition, the detection part directly detects the light intensity information of the ambient light.

In a case that the ambient light intensity is relatively high, that is, when the ambient light exceeds a preset comparison threshold, the first output region A1 with a smaller area is selected as the output range of the received signal. The receiving ratio S of the signal light energy of the first output region A1 is 70%, the quantity N of detectors is 9, and the signal-to-noise ratio can be calculated as SNR1=70%/3 according to formula (1).

In a case that the ambient light intensity is relatively low, that is, when the ambient light is lower than the comparison threshold, the second output region A2 with a larger area is selected as the output range of the received signal. The receiving ratio S of the signal light energy of the second output region A2 is 90%. In this case, the dark count can be ignored, and the ambient light noise is calculated as a constant C, thereby obtaining the signal-to-noise ratio of the second output region A2 as: SNR2=90%/C.

A person skilled in the art can understand that in a case that the ambient light intensity is relatively high, the signal-to-noise ratio of the second output region A2 is SNR2'=90%/5, which is less than SNR1=70%/3. Obviously, in this case, selecting the first output region A1 gives a better signal-to-noise ratio. In a case that the ambient light intensity is relatively low, the signal-to-noise ratio of the first output region A1 is SNR1'=70%/C, which is less than SNR2=90%/C. Obviously, in this case, selecting the second output region A2 gives a better signal-to-noise ratio.

That is, it may be understood based on the foregoing embodiments that by selecting different output regions according to different ambient light intensities, a better signal-to-noise ratio can be obtained overall.

It may be understood that when SiPMs are used, N in the foregoing formula (1) may be rewritten as n*N1, where n is the quantity of detection units, that is, the quantity of SiPMs; and N1 is the quantity of microcells included in each SiPM, that is, the quantity of SPADs included in each SiPM.

It should be noted that the quantities and numerical values herein are only examples. In fact, one detection unit can usually include a relatively large quantity of single-photon detectors. For example, the size of one SiPM is at a millimeter level (for example, it may be about 1 square mm), and the density of microcells thereof (one of the microcells includes a SPAD device used in the SiPM and its corresponding quenching resistance) may range from 100 to 1000 per square mm, and may be even higher than 1000, which depends on the size of the minicells used. Similarly, in a case of a SPAD array, the size of each detection unit depends on the quantity of SPAD detectors included in the detection unit, and the quantity may vary from hundreds to thousands.

Generally, an echo light spot of the lidar is about a few millimeters or even 1 centimeter. That is, one light spot usually covers a dozen or even dozens of detection units.

A person skilled in the art may understand that the foregoing description is only used to clarify the relative size relationship between light spots, the detectors, and the detection units, so as to facilitate reading. With the development of technologies, the size of the detection unit and the size of the echo light spot of the lidar may change accordingly, and the situation after such changes should also fall within the protection scope of the present disclosure.

According to yet another exemplary embodiment of the present disclosure, the present disclosure may not be limited to two output regions.

For example, a first comparison threshold and a second comparison threshold are set, where the first comparison threshold is greater than the second comparison threshold; and a first output region, a second output region, and a third output region are set, where a relationship between areas of the regions is: first output region < second output region < third output region.

In addition, signal-to-noise ratio formulas corresponding to the output regions are as follows:

first output region:

$$SNR = S/\sqrt{N} \quad (1');$$

second output region:

$$SNR = S/C1 \quad (2');$$

and
third output region:

$$SNR = S/C2 \quad (3').$$

A signal light receiving ratio of each output region is proportional to the area of the output region. That is, signal light receiving ratios of the first output region, the second output region, and the third output region increase sequentially, and C1 is greater than C2.

That is, when ambient light noise is relatively low, whether the ambient light noise is less than the second comparison threshold is determined. When the ambient light noise is less than the second comparison threshold, the third output region is selected to receive echoes, and the echo information of the third output region is obtained. In this case, *SNR=S/C2* is used to determine its signal-to-noise ratio. Because the signal light receiving ratio of the third output region is relatively high, its signal-to-noise ratio is relatively high. When the ambient light noise is greater than the second comparison threshold and less than the first comparison threshold, the second output region is selected to receive echoes, and echo information of the second output region is obtained. In this case, $SNR=S/C1$ is used to determine its signal-to-noise ratio.

By using this differentiation method, a higher overall signal-to-noise ratio can be obtained in a case that the ambient light noise is relatively low.

A person skilled in the art may understand that the size and quantity of output regions in the detection unit may be selected by setting different comparison thresholds according to the ambient light intensity, and the quantity of output regions is not limited to a specific number such as two or three, and may be set as required, which all fall within the protection scope of the present disclosure.

Subsequently, in step S102, the detection part obtains echo information of the selected output region.

Specifically, when all the detectors of the detection part have been turned on, step S102 further includes the following step: reading a detection signal of at least one detector in the selected output region; or when all the detectors of the detection part are in an off state, step S102 includes: turning on at least one detector in the selected output region; and reading a detection signal corresponding to at least one detector in the output region.

The detection signal varies based on the specific device used. For example, when SPAD arrays are used to implement the detection units, the detection signal output by the output region is a digital signal, which is used for indicating the quantity of photons in the echoes that can be received by the plurality of detectors, and then determining an echo intensity. In another example, when SiPM units are used to implement the detection unit, the read detection signal of the output region is an analog signal, and a waveform peak value of the analog signal is used for indicating the intensity of the echoes received by the plurality of detection units.

Subsequently, in step S103, detection is performed according to the echo information of the selected output region.

The processing unit of the lidar may receive the echo information in the selected output region and perform detection. For example, according to a receiving time of an echo, a time of flight (TOF) is calculated, so as to calculate a distance to the target object; and the reflectivity of the target object may also be calculated according to a pulse width of the echo.

As described above, the detection unit may preferably include an array formed by SPADs. In the array, each SPAD may be separately addressed, so after the output region is selected in step S101, the detectors included in the output region may be addressed and read to obtain echo information in the output region, that is, to obtain an electrical signal output by the detectors in the output region.

According to an exemplary embodiment of the present disclosure, the plurality of output regions in the detector may be determined according to at least any one of the following manners:

1) A plurality of preset output regions. For example, the plurality of detection units of the detection part are divided into a plurality of output regions of different sizes in advance.

2) The at least one output region is generated in real time according to position information of a light spot region received by the detector.

Specifically, a light spot region is obtained; and the first output region and the second output region are determined based on the light spot region, where the first output region and the second output region are both covered by the light spot region.

For example, when a light spot is received, the center position of the light spot is detected, and based on the center position and the size of the light spot, it is determined that the first output region is a concentric circle that occupies 70% of the area of the light spot, the second output region is a concentric circle that occupies 95% of the area of the light spot, and the like.

3) Read at least one output region that has been stored previously.

Specifically, one or more output regions used in the previous measurement or several previous measurements are used as one or more output regions for the current measurement.

Preferably, in the current measurement, whether the at least one output region used in the previous measurement or several previous measurements is still within the light spot (for example, when the detectors located at the edge of the output region all have a signal, it can be considered that all of the at least one output region is within the light spot region). If the at least one output region is still within the light spot, the currently stored output region continues to be used to obtain information; and if a part of the at least one output region is not within the light spot, the at least one output region is updated according to a position of the current light spot and stored.

For example, the lidar stores two output regions (which are referred to as a first output region and a second output region) used in a previous measurement; in a detection process, when a light spot is received, it is determined that the first output region and the second output region are still within a light spot region, then the first output region and the second output region that are stored previously are used for calculation in this detection. Subsequently, in another detection process, it is determined that at least a part of the first output region and at least a part of the second output region are not within the current light spot region, then the first output region and the second output region are re-determined based on region information corresponding to the current light spot; and the first output region and the second output region are stored for use in subsequent measurements.

More preferably, according to an exemplary solution of the present disclosure, corresponding output regions may be determined according to a received center position of a light spot with reference to historical storage information.

For example, a memory of the lidar stores a plurality of coordinate groups and a plurality of output regions corresponding to the plurality of coordinate groups respectively; then when the detection unit receives a light spot, coordinate information of a center position of the light spot is obtained, and then coordinate groups corresponding to the coordinate information of the center position is selected, and then the output signal of one or more output regions corresponding to the selected coordinate groups is read out.

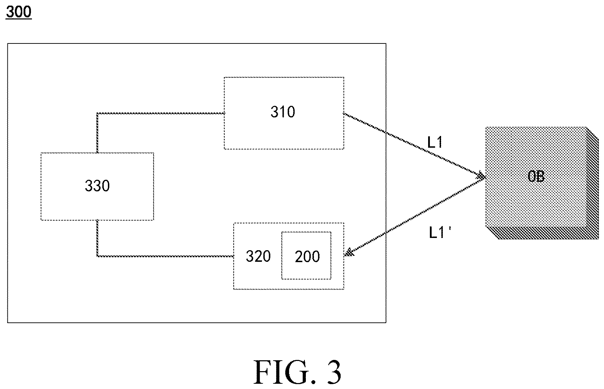

The present disclosure further relates to a lidar. FIG. 3 is a block diagram of a lidar 300 according to an embodiment of the present disclosure. The lidar 300 includes an emission unit 310, a detection unit 320, and a processing unit 330, where the emission unit 310 is configured to emit a detection laser beam L1 to detect a target object OB; the detection unit 320 includes a detector array 200 (as the SPAD planar array described above), and is configured to receive echoes L1' reflected on the target object OB by the detection laser beam and output an echo signal; and the processing unit 330 is coupled to the detection unit 320, and is configured to use the detection method described above to control the detection unit 320 and obtain the echo signal output by the detection unit 320.

According to an embodiment of the present disclosure, the processing unit is further configured to: calculate a distance between the lidar and the target object and/or a reflectivity of the target object according to the output echo signal.

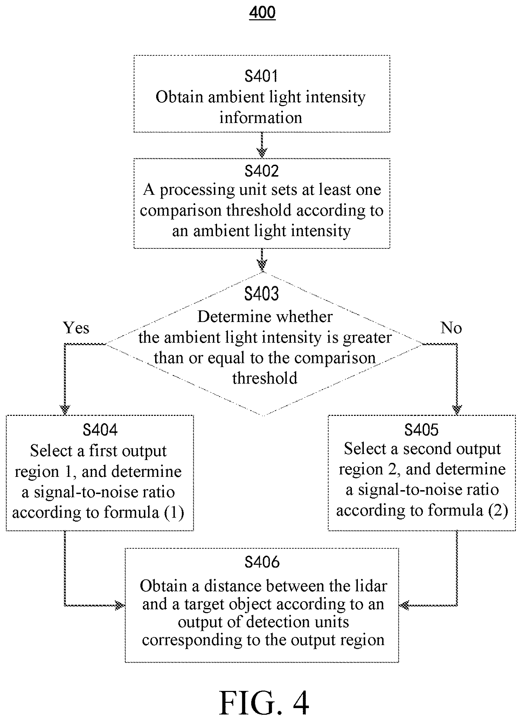

FIG. 4 is a flowchart of a lidar ranging method according to an embodiment of the present disclosure. The lidar ranging method 400 is used for detecting a target object within a certain distance to the lidar in the surrounding environment of the lidar, and one output region is selected from two output regions to receive echoes to detect the target object. As shown in the figure, the ranging method 400 includes the following steps:

Step S401: Obtain ambient light intensity information. As described above, ambient light intensity information may be obtained by using a detection unit, or the ambient light intensity information may be obtained by using a separate ambient light measurement unit.

Step S402: A processing unit sets at least one comparison threshold according to an ambient light intensity. In this ranging process, one comparison threshold is set for performing selection on a first output region and a second output region in the detection unit.

Step S403: Determine whether an ambient light intensity is greater than or equal to the comparison threshold. When the ambient light intensity is greater than the comparison threshold, step S404 is performed; otherwise, step S405 is performed.

Step S404: Select a first output region 1, and determine a signal-to-noise ratio according to formula (1). When the ambient light intensity is relatively high, the first output region 1 having the relatively smaller area is selected for echo detection. The signal-to-noise ratio of the first output region 1 is represented by the following formula (1):

$$SNR = S/\sqrt{N} \quad (1);$$

where S is used for indicating a receiving ratio of signal light energy of the output region, and N is the quantity of detectors in the output region.

Step S405: Select a second output region 2, and determine a signal-to-noise ratio according to formula (2). When the ambient light intensity is less than the comparison threshold, the second output region 2 having the relatively larger area is selected for detection, and the signal-to-noise ratio of the second output region 2 is represented by the following formula (2):

$$SNR = S/C \quad (2).$$

Step S406: Obtain a distance between the lidar and a target object according to an output of detection units corresponding to the output region. For example, a time of flight (TOF) is calculated according to the time of flight ranging method to obtain the distance between the target object and the lidar.

In the present disclosure, an output region is selected in a detection unit at a receiving end of a lidar according to ambient light to receive echoes, and ranging is performed for the lidar based on the foregoing method. Through the embodiments of the present disclosure, the signal-to-noise ratio of the overall ranging of the lidar is improved, the influence of ambient light on the ranging performance of the lidar can be reduced, and power consumption can be saved.

It should be finally noted that the foregoing descriptions are merely exemplary embodiments of the present disclosure, but are not intended to limit the present disclosure. Although the present disclosure has been described in detail with reference to the foregoing embodiments, for a person skilled in the art, modifications can still be made to the technical solutions described in the foregoing embodiments, or equivalent replacements can still be made to some technical features in the technical solutions. Any modification, equivalent replacement, or improvement made and the like within the spirit and principle of the present disclosure shall fall within the protection scope of the present disclosure.

Although the embodiments of the specification have been disclosed above, the embodiments of the specification are not limited thereto. A person skilled in the art may make variations and modifications without departing from the spirit and scope of the embodiments of the specification. Therefore, the protection scope of the embodiments of the specification should be subject to the appended claims.

## Claims

1. A detection method of a lidar, wherein the lidar comprises a detection part, and the detection part comprises a plurality of detection units, wherein the plurality of detection units are capable of forming one or more output regions; and the method comprises the following steps:

   a: selecting an output region from the detection part according to current ambient light information; the output region comprising one or more detection units;
   b: obtaining echo information of the selected output region; and
   c: performing detection according to the echo information of the selected output region.

2. The method according to claim 1, wherein the method further comprises:

   - determining at least one comparison threshold according to ambient light information; and

   step a further comprises:
   a': selecting an output region from the detection part according to the current ambient light information and the at least one comparison threshold.

3. The method according to claim 2, wherein the at least one comparison threshold comprises a first comparison threshold and a second comparison threshold, wherein the first comparison threshold is greater than or equal to the second comparison threshold; the one or more output regions comprise at least a first output region and a second output region, wherein the first output region is less than the second output region; and step a' further comprises:

   selecting the second output region having the relatively smaller area when a light intensity of current ambient light is greater than the first comparison threshold; and
   selecting the first output region having the relatively larger area when the light intensity of the current ambient light is less than the second comparison threshold.

4. The method according to claim 3, wherein the first comparison threshold is equal to the second comparison threshold.

5. The method according to any one of claims 1 to 4, further comprising the following step:
   determining the one or more output regions according to one or more historical light spot regions.

6. The method according to claim 5, wherein the method further comprises:

   obtaining a light spot region; and
   based on the light spot region, determining at least one output region corresponding to the light spot region; and
   step a further comprises:
   a": selecting an output region from the at least one output region according to the current ambient light information, the selected output region being covered by the light spot region.

7. The method according to claim 6, further comprising:

   - updating the one or more output regions according to a new light spot region.

8. The method according to claims 1 to 7, wherein the detection unit comprises a plurality of detectors.

9. The method according to claim 8, wherein the detector represents a single photon avalanche diode (SPAD).

10. The method according to claim 9, wherein the detection unit represents a SPAD array or a silicon photomultiplier (SiPM).

11. The detection method according to any one of claims 1 to 10, further comprising the following step:
    obtaining a distance between the lidar and a target object according to an output of detection units corresponding to the output region.

12. A lidar, comprising:

    an emission unit, configured to emit a detection laser beam to detect a target object;
    a detection part, configured to receive echoes reflected on the target object by the detection laser beam and output an echo signal; and
    a processing unit, coupled to the detection part, and configured to use the detection method according to any one of claims 1 to 11 to control the detection part and obtain the echo signal output by the detection part.

**13.** The lidar according to claim 12, wherein the processing unit is further configured to:
calculate a distance between the lidar and the target object according to the output echo signal.

S101
A detection part selects
an output region
according to ambient
light information

S102
Obtain echo information
corresponding to the
selected output region

S103
Perform detection
according to the echo
information output by
the selected output
region

# FIG. 1

200

A1

A3

A2

【Light spot energy distribution/regions】

# FIG. 2

300

FIG. 3

400

S401
Obtain ambient light intensity
information

S402
A processing unit sets at least one
comparison threshold according to
an ambient light intensity

S403
Determine whether
the ambient light intensity is greater
than or equal to the comparison
threshold

Yes

No

S404
Select a first output
region 1, and determine
a signal-to-noise ratio
according to formula (1)

S405
Select a second output
region 2, and determine
a signal-to-noise ratio
according to formula (2)

S406
Obtain a distance between the lidar
and a target object according to an
output of detection units
corresponding to the output region

FIG. 4

FIG. 5a

FIG. 5b

## INTERNATIONAL SEARCH REPORT

| International application No. |
|---|
| **PCT/CN2021/089478** |

**A. CLASSIFICATION OF SUBJECT MATTER**

G01S 7/497(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNPAT; CNKI; WPI; EPODOC: 激光, 雷达, 探测, 像素, 单元, 阵列, 输出区域, 信噪比, 环境光, 背景光, 噪声, 光强, 阈值, 门限, 面积, 范围, laser, radar, detect+, pixel, cell, unit, array, output region, signal to noise ratio, ambient light, background light, noise, light intensity, threshold, area, range

**C. DOCUMENTS CONSIDERED TO BE RELEVANT**

| Category* | Citation of document, with indication, where appropriate, of the relevant passages | Relevant to claim No. |
|---|---|---|
| Y | CN 105066953 A (ROBERT BOSCH GMBH) 18 November 2015 (2015-11-18) <br> description paragraphs [0022], [0039]-[0049], claim 1, figure 1 | 1-13 |
| Y | CN 210166495 U (SONY SEMICONDUCTOR SOLUTIONS CORP.) 20 March 2020 (2020-03-20) <br> description, paragraphs [0078]-[0088], figure 8 | 1-13 |
| A | CN 109839639 A (NINGBO SUNNY AUTOMOTIVE OPTICAL TECHNOLOGY CO., LTD.) 04 June 2019 (2019-06-04) <br> entire document | 1-13 |
| A | CN 110677596 A (SHENZHEN ADAPS PHOTONICS TECHNOLOGY CO., LTD.) 10 January 2020 (2020-01-10) <br> entire document | 1-13 |
| A | CN 110568422 A (HESAI PHOTONICS TECHNOLOGY CO., LTD.) 13 December 2019 (2019-12-13) <br> entire document | 1-13 |
| A | US 2019227175 A1 (INNOVIZ TECHNOLOGIES LTD.) 25 July 2019 (2019-07-25) <br> entire document | 1-13 |

☐ Further documents are listed in the continuation of Box C.    ☑ See patent family annex.

| | |
|---|---|
| \*   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **24 June 2021** | **28 July 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

| | INTERNATIONAL SEARCH REPORT<br>Information on patent family members | | | International application No.<br>**PCT/CN2021/089478** | |

| Patent document<br>cited in search report | | | Publication date<br>(day/month/year) | Patent family member(s) | | | Publication date<br>(day/month/year) |
|---|---|---|---|---|---|---|---|
| CN | 105066953 | A | 18 November 2015 | CN | 102549381 | B | 19 August 2015 |
| | | | | EP | 2475958 | A1 | 18 July 2012 |
| | | | | CN | 102549381 | A | 04 July 2012 |
| | | | | EP | 3130889 | B1 | 13 June 2018 |
| | | | | US | 2012249998 | A1 | 04 October 2012 |
| | | | | DE | 102009029372 | A1 | 24 March 2011 |
| | | | | WO | 2011029645 | A1 | 17 March 2011 |
| | | | | CN | 105066953 | B | 14 September 2018 |
| | | | | EP | 3130890 | B1 | 20 June 2018 |
| | | | | US | 8908157 | B2 | 09 December 2014 |
| | | | | ES | 2614108 | T3 | 29 May 2017 |
| | | | | EP | 2475958 | B1 | 02 November 2016 |
| | | | | EP | 3130889 | A1 | 15 February 2017 |
| | | | | IN | 222DEN2012 | A | 01 May 2015 |
| | | | | EP | 3130890 | A1 | 15 February 2017 |
| CN | 210166495 | U | 20 March 2020 | DE | 112019002068 | T5 | 28 January 2021 |
| | | | | TW | 202001288 | A | 01 January 2020 |
| | | | | JP | 2019190892 | A | 31 October 2019 |
| | | | | CN | 110389332 | A | 29 October 2019 |
| | | | | EP | 3781967 | A1 | 24 February 2021 |
| | | | | KR | 20210003711 | A | 12 January 2021 |
| | | | | US | 2021025990 | A1 | 28 January 2021 |
| | | | | WO | 2019203057 | A1 | 24 October 2019 |
| CN | 109839639 | A | 04 June 2019 | | None | | |
| CN | 110677596 | A | 10 January 2020 | CN | 210469533 | U | 05 May 2020 |
| CN | 110568422 | A | 13 December 2019 | WO | 2021036567 | A1 | 04 March 2021 |
| US | 2019227175 | A1 | 25 July 2019 | | None | | |

Form PCT/ISA/210 (patent family annex) (January 2015)